# DEMANDE DE BREVET EUROPEEN

(11) **EP 1 688 872 A2**
(43) Date de publication de la demande: **09.08.2006**
(21) Numéro de dépôt: 06290192.1
(22) Date de dépôt: 02.02.2006
(51) Int. Cl.: G06N 3/04

(54) **Outil informatique de prévision**

(30) Priorité: 04.02.2005 FR 0501141
(71) Demandeur: Angeniol, Bernard, 75009 Paris (FR); Dahan, Pierre Louis, 75005 Paris (FR)
(72) Inventeur: Angeniol, Bernard, 75009 Paris (FR); Dahan, Pierre Louis, 75005 Paris (FR)
(74) Mandataire: Plaçais, Jean Yves

(57) **Abrégé**

outil informatique de prévision, du type comprenant une mémoire (20) pour recevoir un jeu de données d'entrée, représentant une statistique temporelle portant sur des quantités relatives à une pluralité d'entités, et un organe de traitement de ces données d'entrée, en vue d'élaborer des prévisions quantitatives sur une partie au moins desdites entités.

L'organe de traitement de ces données comporte :
- une pluralité (22) de modules neuronaux (M1, M2, Mi, Mn),
- une mémoire de jeux de paramètres ayant des identifiants respectifs, valant désignation d'un sous-ensemble d'entités,
   chaque jeu de paramètres étant issu d'un apprentissage d'un module neuronal sur des quantités du passé relatives au sous-ensemble d'entités désigné par l'identifiant du jeu de paramètres,
- un pilote (24), capable d'appliquer conjointement à certains au moins des modules neuronaux
   * d'une part des données représentant des quantités actuelles pour un sous-ensemble d'entités désigné par un identifiant, et
   * d'autre part le jeu de paramètres associé à cet identifiant.

Le pilote (24) est susceptible, en réponse à un jeu de données d'entrée et un groupe d'identifiants, de combiner les sorties respectives des modules neuronaux pour élaborer lesdites prévisions quantitatives, cette combinaison s'effectuant en partie au moins en fonction desdits identifiants.

Procédé de prévision informatique.

Application au milieu boursier.

## Description

L'invention concerne les outils informatiques de prévision.

Parmi les différents outils de prévision disponibles, les réseaux neuronaux offrent l'intérêt de pouvoir s'attaquer à des phénomènes mal connus. Par contre, ils travaillent en aveugle, en ce sens que l'utilisateur ne comprend pas leur mode de fonctionnement. Cela pose problème, notamment lorsque la répartition dans le temps de ces phénomènes est elle aussi mal connue, comme on le verra plus loin en détail.

L'invention a pour but d'améliorer la situation.

A cet effet, elle propose un outil informatique de prévision, du type comprenant une mémoire pour recevoir un jeu de données d'entrée, représentant une statistique temporelle portant sur des quantités relatives à une pluralité d'entités, et un organe de traitement de ces données d'entrée, en vue d'élaborer des prévisions quantitatives sur une partie au moins desdites entités. L'organe de traitement de ces données comporte :
- une pluralité de modules neuronaux,
- une mémoire de jeux de paramètres ayant des identifiants respectifs, valant désignation d'un sous-ensemble d'entités,
   chaque jeu de paramètres étant issu d'un apprentissage d'un module neuronal sur des quantités du passé relatives au sous-ensemble d'entités désigné par l'identifiant du jeu de paramètres,
- un pilote, capable
   d'appliquer conjointement à certains au moins des modules neuronaux
   * d'une part des données représentant des quantités actuelles pour un sous-ensemble d'entités désigné par un identifiant, et
   * d'autre part le jeu de paramètres associé à cet identifiant.
   Le pilote est susceptible, en réponse à un jeu de données d'entrée et un groupe d'identifiants, de combiner les sorties respectives des modules neuronaux pour élaborer lesdites prévisions quantitatives, cette combinaison s'effectuant en partie au moins en fonction desdits identifiants.

Un tel outil informatique est particulièrement intéressant en ce qu'il utilise la puissance d'apprentissage et de spécialisation de plusieurs modules neuronaux. Il est ainsi possible de réaliser des apprentissages permettant d'éviter le mélange de phénomènes distincts, et par conséquent de fournir des prévisions plus précises et correctes.

D'autre part, l'utilisation de plusieurs modules neuronaux et leur apprentissage respectif sur des sous-groupes de données permet de réduire la masse de données en plusieurs sous-groupes. Ces sous-groupes sont plus petits et donc plus faciles à manipuler, et la vitesse d'exécution s'en trouve améliorée.

L'utilisation du pilote permet par ailleurs de sélectionner les modules neuronaux dont les jeux de paramètres apparaissent le plus appropriés pour faire des prévisions en regard de la situation.

Dans un mode de réalisation, chaque identifiant d'un jeu de paramètres est associé à une période du passé, prise dans un ensemble choisi de telles périodes. Cela permet de spécialiser les modules neuronaux sur des périodes choisies et donc d'isoler des phénomènes liés à des périodes précises.

L'invention concerne également un procédé de prévision informatique comprenant les étapes suivantes :
a. recevoir un jeu de données d'entrée, représentant une statistique temporelle portant sur des quantités relatives à une pluralité d'entités,
b. construire une pluralité de modules neuronaux,
c. conduire un apprentissage de ces modules neuronaux sur des sous-ensembles choisis des données d'entrée,
d. mémoriser des jeux de paramètres respectifs identifiés valant désignation de sous-ensembles d'entités, issus des apprentissages respectifs sur certains au moins des sous-ensembles choisis des données d'entrée, les sous-ensembles d'entités désignés par les identifiants des jeux de paramètres étant représentés par les sous-ensembles choisis de données sur lesquels on a conduit les apprentissages respectifs,
e. appliquer à volonté des données actuelles aux modules neuronaux, en associant à ces données un jeu de paramètres dont l'identifiant désigne un sous-ensemble d'entités comportant les entités représentées par ces données, un sous-ensemble de données représentant le sous-ensemble d'entité ayant servi à l'apprentissage du même module,
f. combiner les sorties respectives des modules neuronaux pour élaborer ladite prévision, la combinaison s'effectuant en partie au moins en fonction de l'identifiant du jeu de paramètres affecté à chaque module neuronal.

Dans un mode de réalisation, l'étape c. comprend l'apprentissage des modules neuronaux sur des périodes brèves consécutives, de pas choisi, ce qui donne à chaque fois un jeu élémentaire de paramètres, et l'étape d. comprend la fusion des jeux élémentaires de paramètres qui restent concordants sur des périodes brèves consécutives.

Ce procédé est particulièrement avantageux en ce qu'il permet d'utiliser la puissance de spécialisation des modules neuronaux pour établir des prévisions, tout en s'assurant une précision optimale des prévisions par la spécialisation sur des jeux de données particuliers caractérisant des phénomènes distincts.

Plus particulièrement, on peut spécialiser les modules neuronaux sur des périodes du passé, ce qui permet par exemple de tenir compte des tendances dans la réalisation des prévisions.

D'autres avantages et caractéristiques apparaîtront mieux à la lecture de la description à titre illustratif et non limitatif d'exemples issus des figures sur les dessins annexés sur lesquels :
- la figure 1 représente une vue schématique d'un procédé de prévision informatique auquel peut s'appliquer l'invention ;
- la figure 2 représente un organigramme des éléments utilisés par l'outil informatique de la figure 1 ;
- la figure 3 représente un diagramme du traitement des données au sein de l'outil informatique de la figure 2;
- la figure 4 représente un processus d'apprentissage d'un module neuronal utilisé dans l'outil informatique de la figure 1 ;
- la figure 5 représente un schéma d'un procédé de sélection des modules neuronaux pour une prévision donnée ;
- la figure 6 représente une variante du processus d'apprentissage de la figure 4 ; et
- la figure 7 est un exemple du processus la figure 6.

En outre, la description détaillée est augmentée des annexes suivantes:
- L'Annexe A1 montre un exemple d'une structure de données d'entrées,
- L'Annexe A2 montre un exemple d'une structure de données de calcul calculées à partir de données de l'annexe A1,
- L'Annexe A3 montre un exemple de rassemblement de données de l'annexe A2 dans lequel toutes les données concernant une entité sont rassemblées et classées par date.

Ces Annexes sont mises à part dans un but de clarification, et pour faciliter les renvois. Elles sont parties intégrante de la description, et pourront donc non seulement servir à mieux faire comprendre la présente invention, mais aussi contribuer à sa définition, le cas échéant. Ceci s'applique également en tous points aux dessins.

Il est fait référence dans ce qui suit à des méthodes manipulant des données, ce qui nécessite l'utilisation de certaines conventions. Par exemple, dans la description détaillée, le symbole de citation "et/ou les *italiques* peuvent être utilisés lorsque cela semble nécessaire à la clarté de l'énoncé, par exemple pour faire la différence entre le langage commun et les données. De manière générale :
- un élément de données dont le nom commence par "$" est une variable, un objet de données ou une structure de données ;
- cela peut également être un tableau ou une structure de données équivalente, si ce nom se termine avec une expression entre parenthèses, comme *$Prev(k) ;*
- un élément de données dont le nom ne commence pas par "$", mais qui se termine par une expression entre parenthèses, part exemple *Run _Mod()*, est en général une procédure ou une fonction ;
- en option, une procédure ou une fonction peut être appelée avec un ou plusieurs arguments (paramètres) indiqués à l'intérieur des parenthèses, par exemple *New_Mod($µ*Per(k)*,* Port n);
- les données de type indéfini sont de manière générale indiquées en italiques.

Il est à noter que l'appel à des fonctions et les noms de ces fonctions sont réalisés à des fins pratiques seulement. Cela n'implique pas l'utilisation de données ou de structure de données correspondant exactement aux fonctions décrites ci-après.

De façon générale, un outil informatique de prévision comprend tout d'abord une mémoire pour recevoir un jeu de données d'entrée. Ces données d'entrée représentent une statistique temporelle portant sur des valeurs numériques (quantités), associées à des identifiants, que l'on peut appeler ici entités, ou encore objets. A partir de là, un organe de traitement utilise ces données d'entrée en vue d'élaborer des prévisions quantitatives portant sur lesdites entités ou objets, ou sur une partie au moins d'entre elles.

Les outils informatiques de prévision permettent notamment d'étudier des situations caractérisées par des phénomènes complexes, qui se déroulent dans le temps avec une certaine dynamique. Plus particulièrement, la situation à étudier peut se caractériser par des phénomènes de nature discrète, par des quantités affectées d'un bruit associé aux mesures de ces phénomènes, et/ou par le fait que sont seules disponibles des mesures partielles, qui ne permettent de caractériser ces phénomènes qu'incomplètement.

En général, la prévision fait intervenir notamment les opérations suivantes:
- dans un premier temps, chercher à obtenir un maximum de mesures quantitatives pour décrire le mieux possible les phénomènes caractérisant la situation des entités.
- sur la base de ces mesures, établir un ou des modèles de description de ces phénomènes,
- utiliser ce ou ces modèles avec des données récentes, pour établir des prévisions quantitatives sur les entités.

Cette approche est courante dans différentes applications, telles que le cadre boursier avec la gestion de fonds, la prévision des consommations électriques d'une population, la prévision d'événements sismiques, ainsi que les prévisions météorologiques, entre autres. Ces applications seront qualifiées ici de "non triviales".

Dans la pratique, chaque entité est souvent décomposée en des propriétés ou sous-rubriques, qui sont elles-mêmes associées à des quantités. Autrement dit, l'ensemble des quantités associées à une entité donnée est structuré. La prévision devient naturellement d'autant plus délicate que la structure des entités est plus complexe.

Des difficultés surviennent là où les mesures quantitatives sont assez, voire extrêmement, hétéroclites et ne permettent pas de distinguer directement les différents phénomènes caractérisant la situation. C'est particulièrement vrai dans les applications non triviales, telles que celles énumérées plus haut.

Il reste possible de conduire une observation des mesures sur un laps de temps suffisamment étendu, et de faire appel à un système à apprentissage, comme un module neuronal Celui-ci, à partir de données d'entrées et de données de sorties portant sur des entités choisies, établit par apprentissage un jeu de paramètres d'allure arbitraire, qui permettent néanmoins de caractériser de manière globale les relations entre données d'entrée et données de sortie. Pour effectuer les prévisions, on utilise le module neuronal avec des quantités actuelles ou récentes.

L'utilisation d'un module neuronal se fait en aveugle. Cela pose problème, lorsque l'on peut s'attendre à rencontrer des mesures quantitatives qui obéissent à des phénomènes différents selon les périodes. Ainsi, la conduite de l'apprentissage d'un module neuronal avec des données recouvrant une grande période temporelle peut impliquer la mise en relation de mesures quantitatives se rapportant à des phénomènes différents mais non discernés. Le jeu de paramètres obtenu est alors faussé et les prévisions associées également par voie de conséquence.

C'est pourquoi l'utilisation d'un module neuronal pour effectuer des prévisions dans le cadre de situations non triviales pose problème.

On verra maintenant comment l'invention permet d'améliorer la situation.

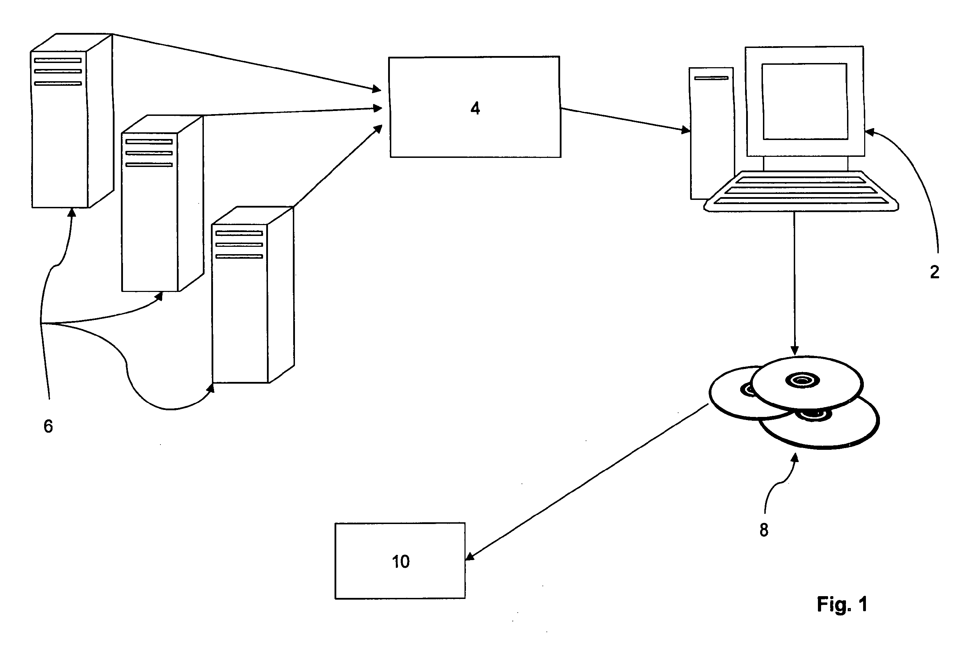

La figure 1 représente un schéma d'un processus de prévision informatique.

Comme on peut le voir sur cette figure, un outil informatique 2 reçoit des données d'entrée 4 d'un ensemble de serveurs 6. Ces données sont ensuite traitées dans l'outil 2 par un logiciel 8 qui retourne des résultats 10.

Dans l'exemple ici décrit, l'outil informatique 2 est un ordinateur dont le système d'exploitation est du type Windows (Marque déposée). L'outil 2 obtient les données 4 des serveurs 6 par le réseau Internet. On pourrait utiliser un autre type d'ordinateur utilisant un système d'exploitation choisi et relié aux serveurs par un réseau autre qu'Internet.

Le logiciel 8 peut être écrit dans un langage de programmation tel que Visual Basic (Marque déposée). Ce logiciel pourrait être écrit dans tout autre langage compatible avec le système d'exploitation de l'ordinateur 2.

La prévision informatique implique les opérations suivantes :
- obtention des données 4 depuis les serveurs 6,
- traitement de ces données dans l'ordinateur 2 par le logiciel 8,
- affichage de résultats 10.

On peut également imprimer les prévisions informatiques 10 ou les enregistrer dans un fichier d'un format choisi.

Le traitement des données ainsi que les organes de traitement de ces données au sein de l'ordinateur 2 seront précisés dans la suite de la description.

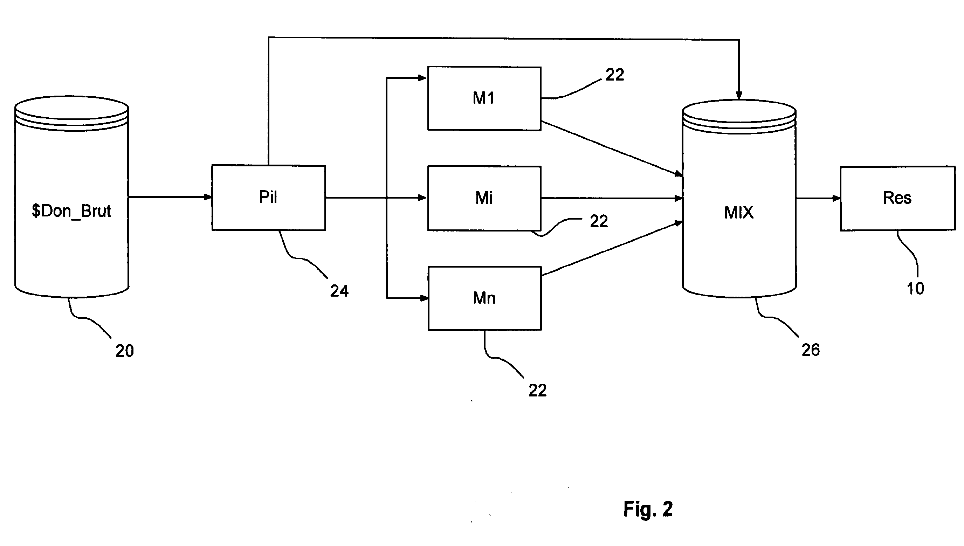

La figure 2 représente un organigramme des éléments intervenant dans le traitement des données au sein de l'ordinateur 2.

Dans l'exemple ici décrit, l'ordinateur 2 comporte une mémoire 20 pour recevoir un jeu de données d'entrée 4 que l'on désignera par la suite par le terme *$Don_Brut*, un ensemble de modules neuronaux 22 M1 à Mn, un organe MIX 26 pour choisir les prévisions et un pilote Pil 24 qui organise les relations entre ces divers éléments. En sortie de l'organe MIX, les résultats Res 10 sont disponibles. La nature de ces combinaisons sera détaillée ci-après.

Un module neuronal est un outil informatique qui transforme des données d'entrée en données de sortie à partir d'un jeu de paramètres, sans que l'utilisateur intervienne autrement que pour donner les données d'entrée. Le jeu de paramètres est issu d'un apprentissage du module neuronal. Pour établir ce jeu de paramètres, on fournit des données d'apprentissage comportant des données d'entrée et des données de sortie, et on laisse le module neuronal les mettre en relation pendant une durée choisie d'apprentissage. Le jeu de paramètres qui en résulte caractérise les relations globales qui existent entre les données d'apprentissage que l'on a fournit au module neuronal.

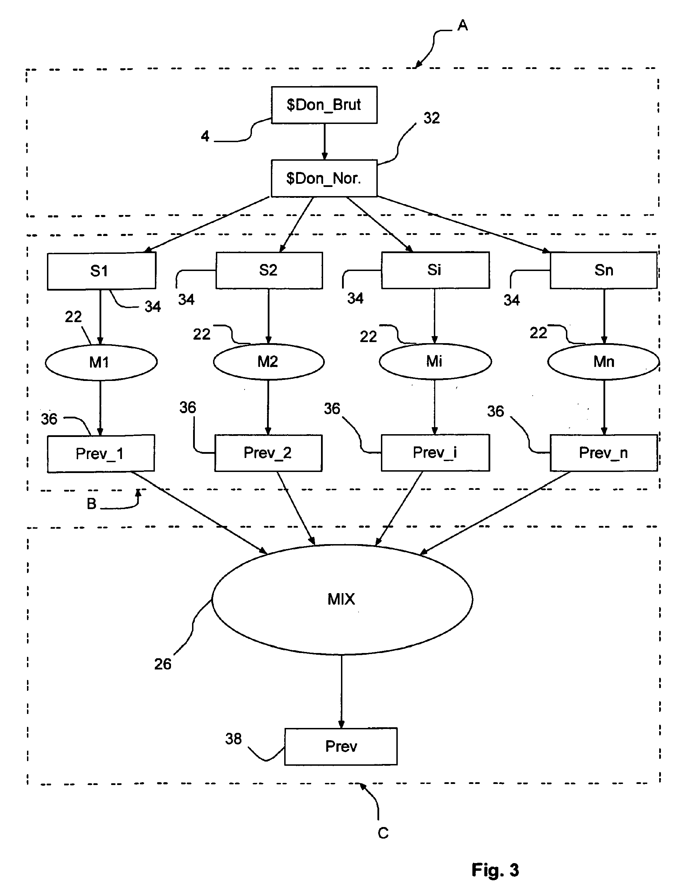

La figure 3 montre plus en détail les relations entre les éléments de l'ordinateur 2 et leurs fonctions dans le traitement des données. Ce schéma comporte un bloc A qui explicite le traitement de données d'entrée, un bloc B qui explicite le traitement des données du bloc A par des modules neuronaux et un bloc C qui explicite le traitement des données du bloc B.

Le bloc A explicite le traitement des données au niveau de la mémoire 20. Dans un premier temps, les données brutes *$Don_Brut* obtenues des serveurs 6 sont transformées en données de calcul *$Don_Norm* 32 dont la nature sera précisée ci-après.

Le pilote 24 envoie alors sélectivement aux modules 22 des données 32. Comme on peut le voir dans le bloc B, chaque module 22, ici représenté M1, M2, Mi et Mn, reçoit un sous-ensemble 34 des données *$Don_Norm.* C'est le pilote 24 qui assure cette sélection en relation avec un identifiant de chaque module 22 dont la nature sera précisée plus tard. Les sous-ensembles 34 sont ici représentés par les références S1, S2, Si, Sn. Chaque module M1, M2, Mi, Mn, produit la prévision 36 respective *Prev*_*1*, *Prev*_*2*, *Prev_i et Prev_n* à partir des sous-ensembles S1, S2, Si, Sn et des jeux de paramètres respectifs.

Ces prévisions 36 sont alors envoyées à l'organe MIX qui retourne une prévision *Prev* 38. La prévision 38 peut être affichée directement comme résultat 10, où elle peut-être traitée à des fins de présentation notamment. L'organe MIX sera décrit plus en détail plus bas.

Dans un mode de réalisation particulier, les données d'entrée 4 se présentent de manière générale sous la forme d'une table représentée en annexe A1. Ici, chaque donnée caractérise une entité et est représentée par un quadruplet <titre ; description ; date ; valeur>.

Ainsi:
- le champ "titre" indique le nom de l'entité que cette donnée caractérise, tel "ALCA-TEL120";
- le champ "description" indique la nature de la valeur de cette donnée, par exemple "cours" ;
- le champ "date" indique la date à laquelle la valeur de cette donnée a été enregistrée.
- le champ "valeur" renferme la valeur de la donnée.

Comme le montre l'annexe A1, parmi les différents types de valeurs fournies par les serveurs pour une entité donnée, on trouve des cours, des prévisions d'analystes sur ces cours, des taux de variation de monnaies, des indices boursiers, des changements de recommandation d'achat, des indices industriels, etc.. Ce sont autant de propriétés ou sous-rubriques distinctes d'une entité.

Les données sont de nature extrêmement variée et regroupent l'ensemble des données financières et comptables que l'on peut rattacher à l'univers boursier.

Les données *$Don*_*Norm,* qui sont du type représenté sur l'annexe A2, sont obtenues par combinaison linéaire et/ou fonctionnelle des données *$Don _Brut.* Dans cette annexe, on voit qu'une grande variété de données obtenues directement ou déduites permettent de caractériser une entité que l'on cherche à prévoir, c'est-à-dire dans l'exemple décrit la valeur d'un titre boursier de nature "option à terme".

De manière plus précise, pour une entité donnée, un ensemble de quantités sont calculées afin de le caractériser. Ainsi, les prévisions des analystes obtenues des serveurs 6 sont moyennées, les changements de recommandation d'achat et de vente sont rationalisés, les performances récentes, le volume et "l'indice de force relative" (Relative Strength Index ou RSI) normalisés. D'autres caractéristiques sont calculées selon des formules propres au pilote, telles la volatilité, la cyclicité, la maturité ou la liquidité du titre.

Après traitement des données *$Don_Brut,* chacune des entités dont on cherche à prévoir le cours peut être représentée par une table qui comprend des rangs correspondant aux rangs de l'annexe A2 et des colonnes de valeur de ces rangs pour chaque date possible, c'est à dire chaque jour, comme représenté en annexe A3. Le contenu de ces rangs et de ces colonnes sont les valeurs des données *$Don_Norm* associées à cette entité.

L'une des applications de l'invention est de réaliser des prévisions sur des valeurs boursières. A cette fin, on utilise un ensemble de données du passé reliées à ces valeurs boursières pour déterminer leurs cours à venir.

Dans cette application, les prévisions portent sur un portefeuille de valeurs. Un portefeuille contiendra donc toutes les données *$Don_Norm* associées à une ou plusieurs entités et désigne cette ou ces entités.

Il peut être intéressant par exemple de créer un portefeuille regroupant toutes les options à terme concernant les sociétés spécialisées dans les systèmes de sécurité réseau.

La Demanderesse propose d'améliorer les prévisions informatique pour des applications qualifiées de "non triviales", c'est à dire les applications telles que la gestion de fonds dans le cadre boursier, la prévision des consommations électriques d'une population, la prévision d'événements sismiques, ainsi que les prévisions météorologiques, entre autres.

Ces applications non triviales présentent la particularité d'être relativement cycliques. C'est à dire que ces applications présentent des phénomènes qui se succèdent et/ou se superposent dans le temps, et qu'il est possible de rattacher certains phénomènes à des périodes. Autrement dit, il est possible de segmenter le temps et de déterminer des périodes durant lesquelles un ou plusieurs phénomènes sont prédominants.

Les applications de l'art antérieur utilisant un module neuronal pour prévoir toutes ces entités a produit des résultats non satisfaisants. L'utilisation de plusieurs modules neuronaux pour la prévision de paramètres intermédiaires s'est également révélée problématique.

La Demanderesse propose de restreindre le portefeuille aux données associées à une période temporelle choisie et d'utiliser une pluralité de modules neuronaux qui caractériseront chacun une période donnée, d'une manière particulière. Ainsi, l'invention permet d'établir une pluralité de modules neuronaux qui seront "spécialisés" selon une période, ou un phénomène donné, et dont les prévisions sont donc particulièrement précises pour des phénomènes particuliers.

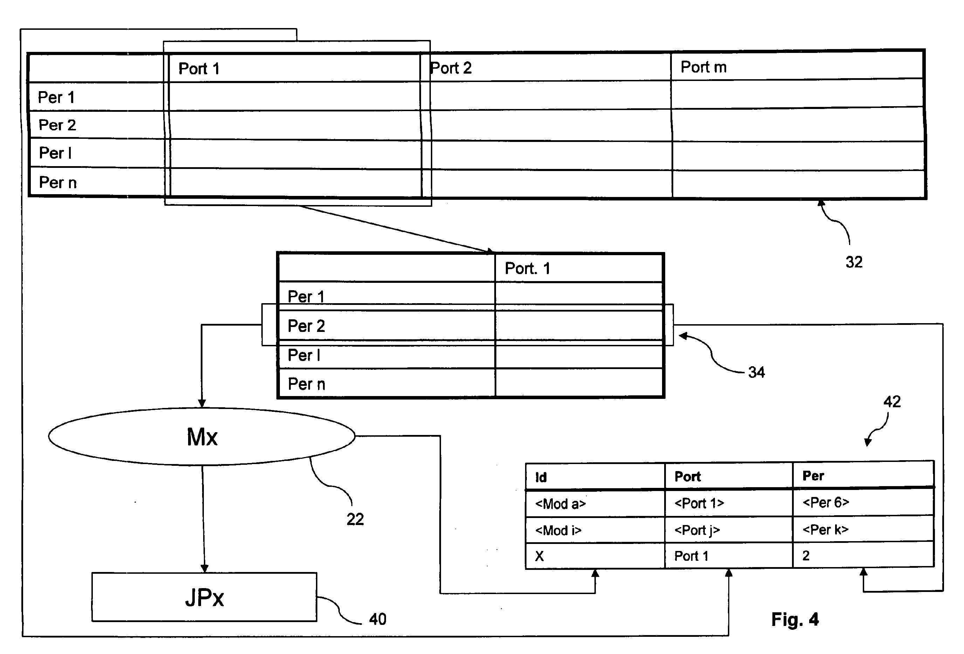

La figure 4 représente un diagramme décrivant la construction d'un module neuronal pour l'ordinateur de la figure 1.

La première étape de création d'un module neuronal consiste dans un premier temps à sélectionner un portefeuille, dans l'exemple ici décrit un portefeuille Port 1, et une période, dans l'exemple ici décrit une période Per 2.

Un apprentissage sur un module neuronal Mx désigné par un identifiant X est alors réalisé. Le jeu de paramètres JPx résultant de cet apprentissage est alors stocké dans une mémoire de jeu de paramètres 40.

Une fois l'apprentissage réalisé, le module neuronal Mx est stocké sur l'ordinateur 2. Une ligne permettant d'accéder à ces deux éléments est entrée dans une table d'identification 42.

La table d'identification 42 comporte ici trois colonnes, une colonne comportant l'identifiant de chaque module neuronal, une seconde colonne comportant un champ désignant le portefeuille associé à ce module neuronal et une troisième colonne comportant la période sur laquelle l'apprentissage du module a été conduit. L'identifiant permet d'avoir accès à un module neuronal et au jeu de paramètres qui lui est associé.

Le module neuronal ainsi obtenu est capable de réaliser des prévisions quantitatives pour des entités, suite à un apprentissage sur une période donnée. Lorsque l'on conduit ce processus en choisissant une période que l'on sait caractéristique pour un portefeuille donné d'entités, le module neuronal obtenu est alors particulièrement utile, en ce qu'il permet d'effectuer des prévisions très précises dans une situation similaire à celle qui caractérise la période d'apprentissage. Par exemple, dans une application météorologique, l'apprentissage d'un module neuronal sur une période caractéristique d'une sécheresse pour un lieu particulier permet de prévoir de manière fidèle cette même période dans le futur.

Une fois les calculs des prévisions quantitatives réalisés pour chaque module neuronal, il est intéressant de sélectionner les prévisions issues des modules neuronaux qui semblent le mieux adaptés à la situation actuelle.

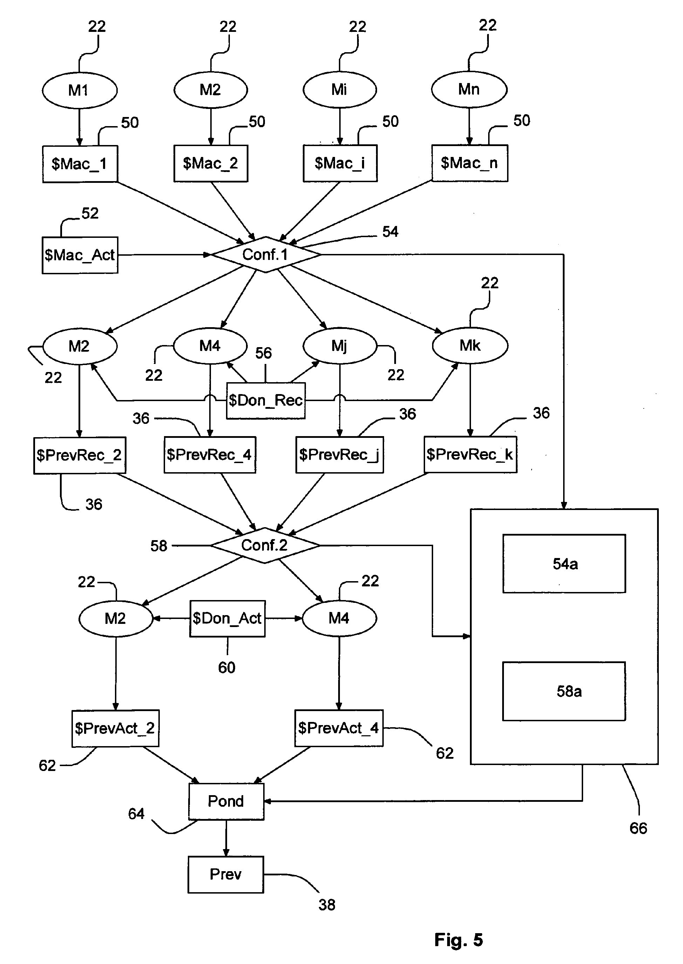

La figure 5 représente le procédé de choix des prévisions qui a lieu dans l'organe de choix MIX. Dans un premier temps, pour un portefeuille donné, le pilote 24 fournit à l'organe de choix MIX un jeu de données macro-économiques actuel 50 *$Mac_Act.*

Les modules neuronaux 22 capables d'établir des prévisions quantitatives sur des entités en rapport avec celles que contient le portefeuille donné sont d'abord sélectionnés. Dans l'exemple ici décrit, ce sont les modules M1, M2, Mi jusqu'à Mn.

Pour chacun de ces modules 22, un jeu de données macro-économiques 50 semblables *$Mac_1*, *$Mac_2*, *$Mac_i* jusqu'à *$Mac_n* est établi. C'est-à-dire que pour chacun de ces modules, on calcule un jeu de valeurs 50 représentatives des données macro-économiques du jeu *$Mac_Act* relativement à la période à laquelle est associé chaque module 22.

Une valeur représentant l'éloignement entre le jeu actuel *$Mac_Act* et le jeu *$Mac_1* (respectivement *$Mac*_2, *$Mac_i* jusqu'à *$Mac_n)* du module M1 (respectivement M2, Mi jusqu'à Mn) est calculée dans un module 54. Ce module Conf 1 envoie l'ensemble de ces valeurs, aussi appelées "score de confiance 1" dans une mémoire 54a qui sera décrite plus bas.

Un tiers (plus généralement 1/p) des modules dont le jeu est le plus éloigné du jeu actuel sont éliminés. La valeur peut par exemple être basée sur la mesure d'une distance normalisée entre les différents jeux.

Des valeurs autres que les distances normalisées sont envisageables et il s'agit avant tout de déterminer ceux des modules qui ont les caractéristiques macro-économiques qui correspondent le mieux aux conditions macro-économiques actuelles pour la prévision.

Dans l'exemple ici décrit, les modules neuronaux restants sont M2, M4, Mj et Mk. Des données récentes 56 sont fournies à ces modules neuronaux restants. Ces données récentes *$Don_Rec* portent sur les entités du portefeuille de cet exemple pour les deux dernières semaines.

En fonction des données *$Don_Rec,* les modules neuronaux M2, M4, Mj et Mk génèrent des prévisions 36 respectives *$PrevRec*_2, *$PrevRec*_*4*, *$PrevRec_j* et *$PrevRec_k.* Ces prévisions sont comparées dans un module 58 . Dans cet exemple, cette comparaison est basée sur une valeur indiquant l'écart entre les prévisions *$PrevRec_2, $PrevRec_4, $PrevRec_j* et *$PrevRec_k* et les cours actuels. Ce module Conf_2 envoie l'ensemble de ces valeurs, aussi appelées "score de confiance 2" dans une mémoire 58a qui sera décrite plus bas.

La même distance que celle utilisée plus haut est utilisée pour établir les valeurs. Néanmoins, elle pourrait différer et là aussi il s'agit avant tout de déterminer ceux des modules qui réalisent les prévisions qui correspondent le mieux aux conditions actuelles.

La moitié (plus généralement 1/q) des modules les moins performants sont éliminés. Il reste alors un tiers des modules (plus généralement 1/r). La proportion de modules sélectionnés à chaque étape peut bien sûr varier, l'idée globale étant de choisir p et q de telle sorte que r est supérieur à 3, c'est à dire que l'on cherche à ne garder que le tiers des modules qui permettent le mieux de décrire la situation actuelle.

Dans l'exemple ici décrit, les modules M2 et M4 sont sélectionnés. Des données actuelles *$Don _Act* 60 leurs sont alors fournies. Dans cet exemple, les données actuelles *$Don _Act* correspondent aux cours du jour dont on cherche à réaliser la prévision. Les modules M2 et M4 génèrent des prévisions 62 respectives *$PrevAct*_2 et *$PrevAct*_4.

Les prévisions 62 sont alors transmises à un module Pond 64. Dans cet exemple, le module Pond pondère les prévisions 62 en fonction des valeurs stockées dans les mémoire 54a et 58a. En effet, le "score de confiance 1" et le "score de confiance 2" respectifs calculés précédemment sont multipliés et forment un coefficient ou "levier" pour chacune des prédictions 62. Le résultat est la prévision *Prev* 38.

Les mémoires 54a et 58a font partie d'une mémoire 66. Dans cet exemple, ces mémoires sont utilisées directement. Il serait cependant possible d'inclure un programme dans la mémoire 66, pour raffiner les "score de confiance 1" et "score de confiance 2", qui tiendrait compte des prévisions déjà effectuées.

Dans l'exemple décrit, la prévision 38 est soumise à l'utilisateur sous la forme d'un tableau dont les rangs sont les entités composant le portefeuille de cet exemple, et les colonnes sont les prédictions d'évolution de leur cours.

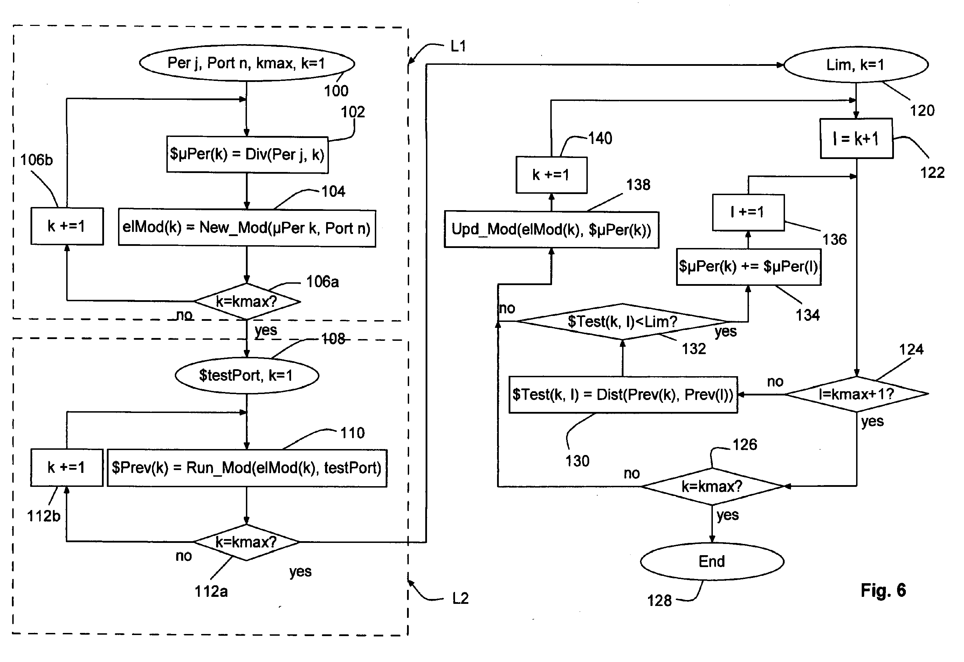

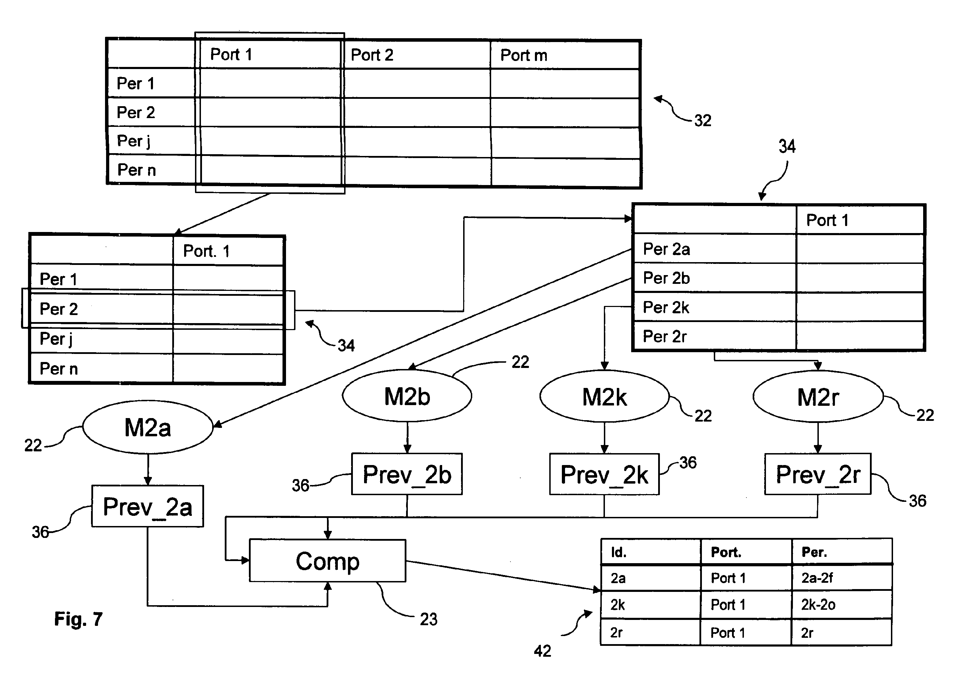

La figure 6 représente une variante du processus de la figure 4, dans laquelle la création des modules neuronaux est automatisée. Un exemple de fonctionnement est illustré sur la figure 7.

La création commence par la sélection d'un portefeuille Port n et d'une période Per j. Il y a deux étapes fondamentales représentées sur la figure 6:
- dans un premier temps, des micro-périodes et des modules élémentaires associés sont créés, et
- dans un second temps, les modules élémentaires sont comparés pour les combiner par affinité.

D'abord, une période Per j, un portefeuille Port n de données *$Don*_*Norm* et un entier kmax sont des paramètres 100 choisis. Une boucle L1 est initiée, pour diviser la période Per j en kmax micro-périodes, et générer des modules neuronaux élémentaires correspondants.

Dans la boucle L1, à la k-ième itération :
- dans une opération 102, une fonction *Div()* prend pour arguments la période Per j et l'itération de la boucle et retourne une micro-période *$µPer(k)* correspondant au quantième k de la période Per j,
- dans une opération 104, une fonction *New_Mod()* prend pour arguments une période *$µPer(k)* et un portefeuille Port n, et crée un module élémentaire elMod(k) en réalisant son apprentissage sur le portefeuille Port n, pour la période *$µPer(k),* et
- dans une opération 106a la condition de fin de boucle est testée, et si elle n'est pas vérifiée, k est incrémenté dans une opération 106b.

Afin de comparer ces modules élémentaires, une boucle L2 utilise comme paramètre 108 un jeu de données *$testPort.*

Dans L2, une opération 110 est répétée, faisant appel à une fonction *Run_Mod().* La fonction *Run_Mod()* prend pour arguments un module elmod(k) et le jeu *$testPort.* Elle applique le jeu de données *$testPort* au module elmod(k) et le résultat est une prévision *$Prev(k)* qui est stockée.

Cette boucle est menée de manière séquentielle grâce des opérations de fin de boucle 112a et d'incrémentation 112b.

Le choix d'une limite *$Lim* comme paramètre 120 marque le début de la deuxième étape susmentionnée. Dans cette deuxième étape, pour chaque module élémentaire elMod(k), on cherche les modules élémentaires consécutifs qui lui sont proches.

Concrètement, un indice k est d'abord fixé et un indice 1 est incrémenté de 1 par rapport à k dans une opération 122.

Dans une opération 124, on teste si 1 est supérieur au nombre kmax de modules élémentaires.

Si c'est le cas on teste dans une opération 126 si k est égal à kmax, ce qui signifierait la fin 128 de cette étape. Si l'opération 126 retourne un résultat négatif, on effectue une opération 138 décrite ci-après.

Si ce n'est pas le cas, on calcule dans une opération 130 une valeur *$Test(k*,*1)* à l'aide d'une fonction *Dist()* dont les arguments sont les prévisions respectives *$Prev(k)* et *$Prev(l)* des modules élémentaires elMod(k) et elMod(1) calculées dans la première étape.

La fonction *Dist()* détermine la mesure d'une distance normalisée entre les prévisions *$Prev(k)* et *$Prev(l)*. Il est envisageable d'utiliser d'autres distances pour déterminer cette valeur.

Dans une opération 132, on teste si la valeur *$Test(k,l)* est inférieure à la limite *$Lim* susmentionnée:
- si oui, alors on considère que les modules elMod(k) et elMod(1) sont assez semblables.
   Les modules elMod(k) et elMod(1) sont alors "fusionnés" en concaténant leurs périodes dans une opération 134. Concrètement, la période *$µPer(k)* est ajoutée de la période *$µPer(l).* Ensuite, 1 est incrémenté dans une opération 136 et l'on passe au module élémentaire elMod(1) suivant.
- si non, alors les modules elMod(k) et elMod(1) sont considérés comme différents.
   Dans une opération 138, le module elMod(k) est "mis à jour" en fonction des modules élémentaires avec lesquels il a été "fusionné". Concrètement, une fonction *Upd_Mod()* dont les arguments sont elmod(k) et *$µPer(k)* reconduit l'apprentissage du module élémentaire elMod(k), mais sur la nouvelle période *$µPer(k)*. Ensuite, k est incrémenté dans une opération 140, et on recommence le même processus avec l'opération 122, car le module elmod(k) a changé.

On notera que les opérations 13 8 et 140 sont également effectuées si l'opération 126 retourne un résultat négatif car cela signifie que pour un k donné, tous les modules suivants ont été "fusionnés" avec le module elMod(k).

La figure 7 montre un exemple pratique du processus de la figure 6. Sur cette figure, parmi des données 32, un portefeuille Port 1 et une macro-période Per 2 sont sélectionnés pour conduire le processus.

Dans un premier temps, r micro-périodes Per 2a, Per 2b, Per 2k jusqu'à Per 2r sont crées, et r modules élémentaires M2a, M2b, M2k jusqu'à M2r leur correspondant également. A partir de données de tests non représentées pour des raisons de simplicité, des prévisions 36 *Prev_2a, Prev_2b, Prev_2kjusqu'à Prev_2r* issues des modules 22 respectifs M2a, M2b, M2k jusqu'à M2r sont alors entrées dans un comparateur 23.

Le comparateur Comp réalise la deuxième étape de la figure 6 et modifie la table de correspondance 42 en entrant des lignes correspondant aux nouveaux modules. Ainsi un nouveau module neuronal d'identifiant 2a (respectivement 2k, 2r) est listé et associé au portefeuille Port 1 et à la période Per 2a-Per 2f (respectivement Per 2k-Per 2o, Per 2r). En tout, r nouveaux modules sont générés.

Il est à noter qu'on pourrait effectuer le processus de "fusion" de la figure 6 plusieurs fois afin de réduire le nombre de nouveaux modules générés.

Il est enfin à noter qu'il est possible de faire fonctionner les modules neuronaux de l'invention en parallèle ou en série. C'est à dire que selon les besoins en puissance de calcul à un instant donné, il est possible de faire fonctionner un ou plusieurs module neuronal en même temps. Ainsi, l'apprentissage de plusieurs modules neuronaux sera de préférence réalisé de manière séquentielle, un module après l'autre, alors que la réalisation de prévisions sur plusieurs modules neuronaux pourra être réalisée en parallèle, c'est à dire tous ou une partie des modules simultanément. L'inverse est également possible.

L'invention ne se limite pas à la description des exemples ci-dessus, donnés à titre illustratif et non limitatif. Les exemples donnés dans les annexes A1, A2 et A3 ne sauraient également être limitatifs.

L'invention vise toute combinaison des variantes décrites ci-dessus que l'homme du métier saura envisager, notamment à la lecture des revendications qui suivent.

L'invention ne se limite pas à la prévision de valeurs boursières mais pourrait notamment trouver une application dans le cadre de recherches météorologiques ou encore pour des prévisions de consommation d'électricité.

**ANNEXE 1**

| Titre | Description | Date | Valeur |
|---|---|---|---|
| ALCATEL 120 | Cours | 01/09/97 | 5,6 |
| FRANCETEL80 | Cours | 01/09/97 | 2,3 |
| ALCATEL120 | Changements Recommandation Achat | 01/09/97 | 6 |
| DOLLAR | Variation | 01/09/97 | 0,25% |
| INDICE ACHATS INDUSTRIELS | Variation | 01/09/97 | -3 |

**ANNEXE 2**

| Titre | Description | Date | Valeur |
|---|---|---|---|
| ALCATEL120 | Prevision de Croissance Analystes | 01/09/97 | Moyenne obtenue des serveurs |
| ALCATEL120 | Changements d'Opinions | 01/09/97 | (Nb. Chgmt Ach. - Nb. Chgmt Ven.)/(Nb. Tot. Chgmt) |
| ALCATEL120 | Changements Passees Relatives | 01/09/97 | ΔJour/(Moyenne ΔJour 14 derniers Jours) |
| ALCATEL120 | Performance Nuit Passee | 01/09/97 | ΔNuit |
| ALCATEL120 | Volume | 01/09/97 | Moyenne obtenue des serveurs |
| ALCATEL120 | RSI | 01/09/97 | Moyenne obtenue des serveurs |
| ALCATEL120 | Maturite | 01/09/97 | Calcul Proprietaire |
| ALCATEL120 | Cyclicite | 01/09/97 | Calcul Proprietaire |
| ALCATEL120 | Volatilite | 01/09/97 | Calcul Proprietaire |
| ALCATEL120 | Liquidite | 01/09/97 | Calcul Proprietaire |
| ALCATEL120 | Visibilite et Credibilite des Benefices | 01/09/97 | Calcul Proprietaire |
| ALCATEL120 | Ratio de Sharpe | 01/09/97 | (Retour sur 14 derniers Jours - Retour sans Risque)/Volatilite |
| ALCATEL120 | Ratio Put/Call | 01/09/97 | Nb. Put/Nb. Call |
| ALCATEL120 | Matieres premieres | 01/09/97 | ΔMat. Prem. |
| ALCATEL120 | Dollar | 01/09/97 | ΔDollar |
| ALCATEL120 | Euro | 01/09/97 | ΔEuro |
| ALCATEL120 | CAC40 | 01/09/97 | ΔCAC40 |
| ALCATEL120 | EuroStoxx50 | 01/09/97 | ΔES50 |
| ALCATEL120 | Inflation | 01/09/97 | Tx Infl. Trimestre |
| ALCATEL120 | Indicateur Achats Industriels | 01/09/97 | Indicateur Ach. Ind. |

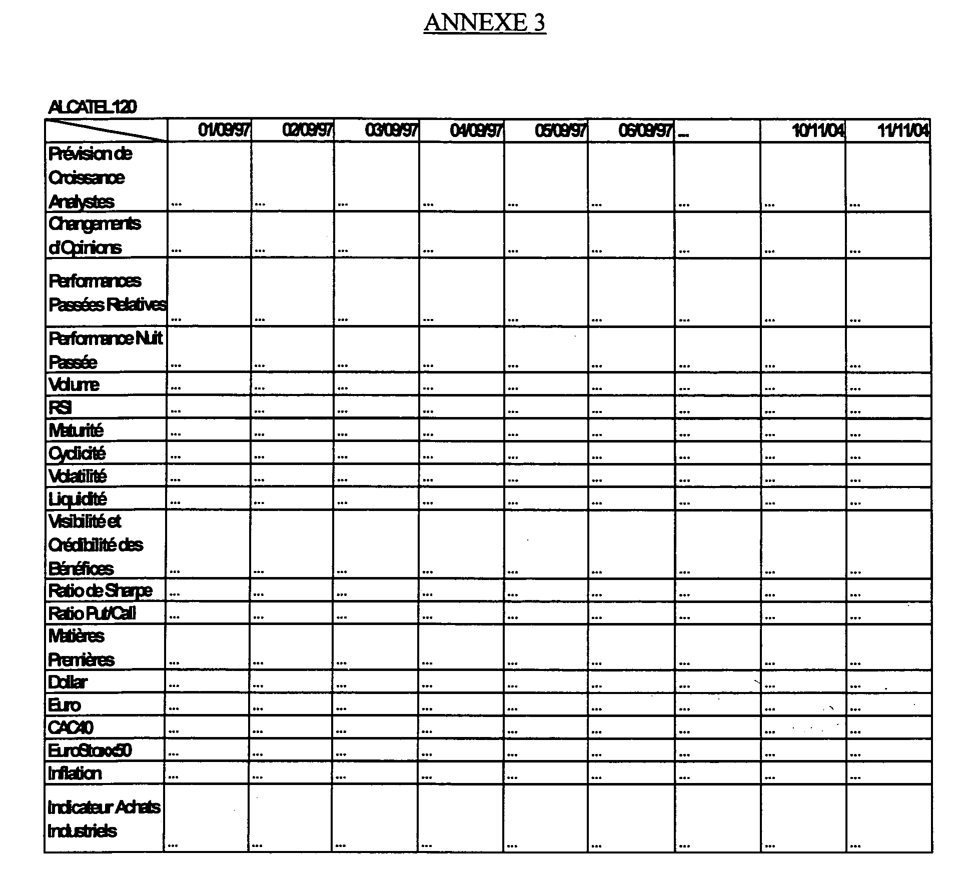

## Revendications

1. Outil informatique de prévision, du type comprenant
une mémoire (20) pour recevoir un jeu de données d'entrée (4), représentant une statistique temporelle portant sur des quantités relatives à une pluralité d'entités (Port 1), et
un organe de traitement de ces données d'entrée (4), en vue d'élaborer des prévisions (38) quantitatives sur une partie au moins desdites entités (Port),
**caractérisé en ce que** l'organe de traitement de ces données comporte:
- une pluralité de modules neuronaux (22),
- une mémoire de jeux de paramètres ayant des identifiants respectifs, valant désignation d'un sous-ensemble d'entités,
chaque jeu de paramètres (JPx) étant issu d'un apprentissage d'un module neuronal (Mx) sur des quantités du passé relatives au sous-ensemble d'entités (Port 1) désigné par l'identifiant (X) du jeu de paramètres,
- un pilote (24), capable
d'appliquer conjointement à certains au moins des modules neuronaux
* d'une part des données *($Don_Act)* représentant des quantités actuelles pour un sous-ensemble d'entités désigné par un identifiant, et
* d'autre part le jeu de paramètres associé à cet identifiant,
ce pilote (24) étant susceptible, en réponse à un jeu de données d'entrée (*$Don_Act*) et un groupe d'identifiants, de combiner les sorties respectives (*$PrevAct_2*, *$PrevAct_4*) des modules neuronaux pour élaborer lesdites prévisions (38) quantitatives, cette combinaison s'effectuant en partie au moins en fonction desdits identifiants.

2. Outil informatique selon la revendication 1, **caractérisé en ce que** chaque identifiant (X) d'un jeu de paramètres est associé à une période du passé (Per 2), prise dans un ensemble choisi de telles périodes.

3. Outil informatique selon la revendication 1 ou 2, **caractérisé en ce que** la combinaison des sorties respectives des modules neuronaux pour élaborer des prévisions quantitatives s'effectue en fonction d'identifiants désignant des sous-ensembles d'entités, lesquels comprennent au moins les entités visées par les prévisions quantitatives.

4. Outil informatique selon l'une des revendications précédentes, **caractérisé en ce que** le jeu de données d'entrée (4) comporte des données représentant des quantités de nature différente, concernant les entités ou des propriétés ou sous-rubriques relatives à ces entités.

5. Outil informatique selon l'une des revendications précédentes, **caractérisé en ce que** les sorties respectives *($PrevAct_2, $PrevAct_4)* des modules neuronaux (M2, M4) sont sélectionnées et pondérées en fonction de données du présent *($Mac_Act, $Don_Rec).*

6. Outil informatique selon l'une des revendications précédentes, **caractérisé en ce que** l'apprentissage des modules neuronaux est réalisé sur des périodes brèves consécutives *($µPer(k)),* de pas choisi, ce qui donne à chaque fois un jeu élémentaire de paramètres, et **en ce que** les jeux élémentaires de paramètres qui restent concordants sur des périodes brèves consécutives sont fusionnés.

7. Outil informatique selon l'une des revendications précédentes, **caractérisé en ce qu'**il comporte une interface graphique capable d'interagir avec le pilote (24) pour afficher des prévisions quantitatives (38).

8. Outil informatique selon l'une des revendications précédentes, **caractérisé en ce que** le pilote est capable d'opérer les modules neuronaux en série ou en parallèle.

9. Procédé de prévision informatique, comprenant les étapes suivantes :
a. recevoir un jeu de données d'entrée (4), représentant une statistique temporelle portant sur des quantités relatives à une pluralité d'entités (Port 1),
b. construire une pluralité de modules neuronaux (22),
c. conduire un apprentissage de ces modules neuronaux sur des sous-ensembles (34) choisis des données d'entrée,
d. mémoriser des jeux de paramètres respectifs identifiés valant désignation de sous-ensembles d'entités (Port 1), issus des apprentissages respectifs sur certains au moins des sous-ensembles choisis des données d'entrée, les sous-ensembles d'entités (Port 1) désignés par les identifiants (X) des jeux de paramètres étant représentés par les sous-ensembles choisis de données sur lesquels on a conduit les apprentissages respectifs,
e. appliquer à volonté des données actuelles aux modules neuronaux, en associant à ces données un jeu de paramètres dont l'identifiant (X) désigne un sous-ensemble d'entités (Port 1) comportant les entités représentées par ces données, un sous-ensemble de données représentant le sous-ensemble d'entité ayant servi à l'apprentissage du même module,
f. combiner les sorties respectives des modules neuronaux pour élaborer ladite prévision, la combinaison s'effectuant en partie au moins en fonction de l'identifiant du jeu de paramètres affecté à chaque module neuronal.

10. Procédé selon la revendication 9, **caractérisé en ce que** l'étape c. comprend l'apprentissage des modules neuronaux sur des périodes brèves consécutives, de pas choisi, ce qui donne à chaque fois un jeu élémentaire de paramètres, et **en ce que** l'étape d. comprend la fusion des jeux élémentaires de paramètres qui restent concordants sur des périodes brèves consécutives.

11. Procédé selon la revendication 9, **caractérisé en ce que** la fusion des jeux élémentaires de paramètres est contrainte par des intervalles de temps macroscopiques prédéfinis.

12. Procédé selon l'une des revendications précédentes, **caractérisé en ce que** l'étape f. comprend la sélection et la pondération des sorties respectives des modules neuronaux en fonction de données du présent.
